# EUROPEAN PATENT APPLICATION

(11) **EP 4 838 667 A1**
(43) Date of publication of application: **11.11.2026**
(21) Application number: 24929852.2
(22) Date of filing: 26.06.2024
(51) Int. Cl.: H01M 50/383, H01M 10/658, H01M 10/6554, H01M 50/593, A62C 3/16, A62D 1/00

(54) **ENERGY STORAGE MODULE**

(30) Priority: 14.03.2024 KR 20240035710
(71) Applicant: SAMSUNG SDI CO., LTD., Yongin-si, Gyeonggi-do 17084 (KR)
(72) Inventor: JUNG, Goo Yun, Yongin-si, Gyeonggi-do 17084 (KR)
(74) Representative: Regimbeau
(86) International application number: PCT/KR2024/008924
(87) International publication number: WO 2025/192790

(57) **Abstract**

The present invention provides an energy storage module capable of preventing heat propagation when an event occurs in a specific battery cell. The energy storage module according to one embodiment of the present invention comprises: a cover member including an inner accommodation space; a plurality of battery cells, which are arranged in the accommodation space and arranged in one direction; a top cover coupled to the cover member; a heat sink arranged between the battery cell and the top cover; and a fire extinguishing sheet in contact with one side of the heat sink, wherein the fire extinguishing sheet sprays a fire extinguishing agent at a preset temperature or higher.

## Description

### [Technical Field]

Embodiments relate to an energy storage module capable of preventing heat propagation when an event occurs in a specific battery cell.

### [Background Art]

An energy storage module is connected with renewable energy and power systems such as solar cells. The energy storage module stores power when the power demand of a load is low and uses the stored power when the power demand of the load is high. The energy storage module includes a plurality of battery cells composed of secondary batteries in large quantities.

Typically, a plurality of battery cells are accommodated in a plurality of trays. And, a plurality of trays are accommodated in a rack. And, a plurality of racks are accommodated in a container box.

Recently, there has been a case where fires occur in the energy storage module. The energy storage module has a problem in that it is not easy to extinguish when a fire occurs. Since the energy storage module includes a plurality of battery cells, the energy storage module has high capacity and high output. Accordingly, a technology for improving the safety of the energy storage module is being studied

### [Disclosure]

### [Technical Problem]

Embodiments provide an energy storage module capable of preventing heat propagation when an event occurs in a specific battery cell.

### [Technical Solution]

An energy storage module according to an embodiment comprises: a cover member including an accommodation space therein; a plurality of battery cells disposed in the accommodation space and arranged in one direction; a top cover coupled to the cover member; a heat sink disposed between the battery cells and the top cover; and a fire extinguishing sheet contacting one surface of the heat sink, wherein the fire extinguishing sheet is configured to spray a fire extinguishing agent at or above a predetermined temperature.

The heat sink may include an exhaust hole, and the exhaust hole may be disposed in a region corresponding to a vent of the battery cell.

The heat sink may comprise at least one of a metal and a ceramic.

The heat sink may comprise a metal including copper, iron, or tungsten, or a ceramic including aluminum nitride.

The heat sink may comprise a metal, and a flame-retardant insulating material may be disposed between the heat sink and the battery cell.

The heat sink may directly contact the battery cell.

The heat sink may be coupled to the cover member, and the heat sink may be spaced apart from the battery cell.

The heat sink may include a plurality of through holes.

The through holes may have a circular shape, a rectangular shape, or a rhombus shape.

A diameter of each of the through holes may be from 2 mm to 5 mm.

The diameter of each of the through holes may be from 2.5 mm to 3.5 mm.

A distance between adjacent through holes may be from 1.5 times to 2.5 times the diameter of the through holes.

The distance between adjacent through holes may be from 1.8 times to 2.2 times the diameter of the through holes.

The fire extinguishing sheet may include an exhaust hole, and the exhaust hole of the fire extinguishing sheet may be disposed at a position corresponding to the exhaust hole of the heat sink.

The fire extinguishing sheet may include a fire extinguishing capsule, the fire extinguishing capsule may be formed in a micro-size, and the fire extinguishing capsule may enclose the fire extinguishing agent therein.

The top cover may include an exhaust hole, and the exhaust hole of the top cover may be disposed at a position corresponding to the exhaust hole of the heat sink.

### [Advantageous Effects]

An energy storage module according to the embodiment includes a heat sink between the fire extinguishing sheet and the battery cell. Accordingly, heat generated from the battery cell is uniformly transferred to the fire extinguishing sheet through the heat sink. Accordingly, when an event occurs in a specific battery cell, the fire extinguishing agent is sprayed over a wide region of the fire extinguishing sheet, not limited to that battery cell. Accordingly, the propagation of heat from the battery cell may be prevented.

### [Description of Drawings]

FIG. 1 is a perspective view showing an energy storage module according to an embodiment.
FIG. 2 is an exploded perspective view showing the energy storage module according to the embodiment.
FIG. 3 is a plan view showing a heat sink of the energy storage module according to an embodiment.
FIG. 4 is an enlarged view showing region A in Fig. 3.
FIG. 5 is another enlarged view of region A in Fig. 3.
FIG. 6 is another enlarged view of region A in Fig. 3.

### [Mode for Invention]

Hereinafter, preferable embodiments of the present disclosure will be described in detail with reference to the accompanying drawings.

The embodiments of the present disclosure are provided to more completely describe the present disclosure to those skilled in the art, the following embodiments may be modified into various other forms, and the scope of the present disclosure is not limited to the following embodiments. Rather, these embodiments are provided to make the present disclosure more meaningful and complete, and to fully convey the spirit of the present disclosure to those skilled in the art.

In addition, in the accompanying drawings, sizes or thicknesses of various components are exaggerated for brevity and clarity. Like numbers refer to like elements throughout. As used herein, the term "and/or" includes any and all combinations of one or more of the associated listed items. In addition, it will be understood that when an element A is referred to as being "connected to" an element B, the element A can be directly connected to the element B or an intervening element C may be present and the element A and the element B are indirectly connected to each other.

The terminology used herein is for the purpose of describing particular embodiments only and is not intended to be limiting of the invention. As used herein, the singular forms are intended to include the plural forms as well, unless the context clearly indicates otherwise. It will be further understood that the terms "comprise or include" and/or "comprising or including," when used in this specification, specify the presence of stated features, numbers, steps, operations, elements, and/or components, but do not preclude the presence or addition of one or more other features, numbers, steps, operations, elements, components, and/or groups thereof.

It will be understood that, although the terms first, second, etc. may be used herein to describe various members, elements, regions, layers and/or sections, these members, elements, regions, layers and/or sections should not be limited by these terms. These terms are only used to distinguish one member, element, region, layer and/or section from another. Thus, for example, a first member, a first element, a first region, a first layer and/or a first section discussed below could be termed a second member, a second element, a second region, a second layer and/or a second section without departing from the teachings of the present invention.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "on" or "above" the other elements or features. Thus, the exemplary term "below" can encompass both an orientation of above and below.

Hereinafter, a secondary battery according to an embodiment is described with reference to the drawings.

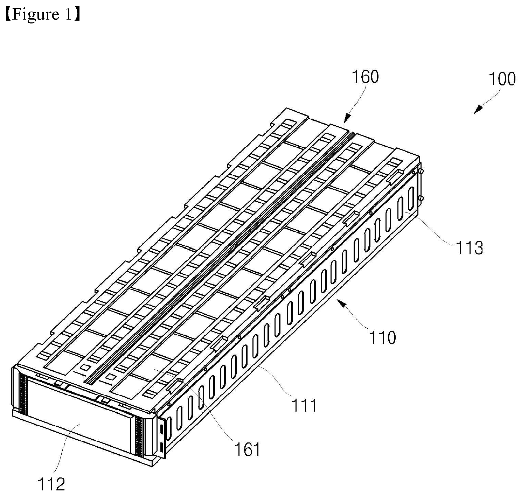

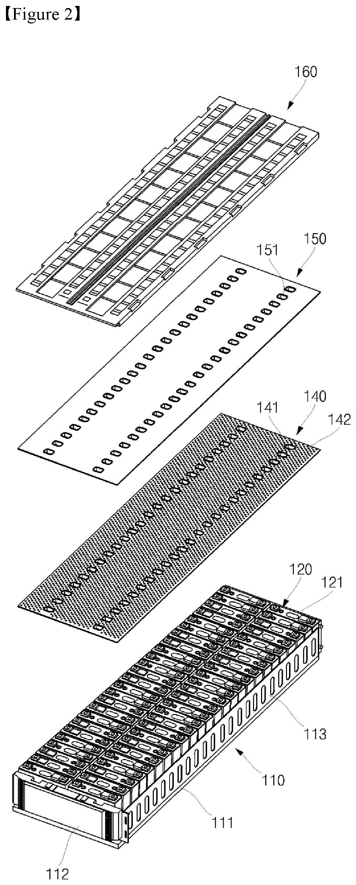

FIG. 1 is a perspective view showing an energy storage module according to an embodiment. FIG. 2 is an exploded perspective view showing the energy storage module according to the embodiment.

Referring to FIGS. 1 and 2, the energy storage module 100 according to the embodiment may include a cover member 110, a battery cell 120, a heat sink 140, a fire extinguishing sheet 150, and a top cover 160.

The cover member 110 includes an accommodating part. The plurality of battery cells 120 are accommodated in the accommodating part. The cover member 110 includes a lower plate 111, an end plate 112, and a side plate 113. Therefore, the cover member 110 may form the accommodating part. And, the cover member 110 may fix the position of the battery cell 120. And, the battery cell 120 may be protected from external shock by the cover member 110.

The battery cell 120 may include an electrode assembly, a case, and a cap assembly. The electrode assembly may include a positive electrode, a negative electrode, and a separator. The separator is disposed between the positive electrode and the negative electrode and is an insulator. The electrode assembly may be wound. The electrode assembly is accommodated in the case. The cap assembly is coupled to the opening of the case.

The positive electrode and the negative electrode may include a current collector formed of a thin metal foil. The current collector may include a coated portion where an active material is applied and an uncoated portion where active material is not applied. After the separator is disposed between the positive electrode and the negative electrode, the positive electrode, the negative electrode, and the separator may be wound. Or, a structure in which the separator is disposed between the positive electrode and the negative electrode may be laminated in multiple layers.

The case forms the overall appearance of the secondary battery. The case may include a conductive metal such as aluminum, an aluminum alloy, or nickel-plated steel. And, the case accommodates an electrode assembly.

The cap assembly may include a cap plate. The cap plate may cover the opening of the case. A positive terminal and a negative terminal may be formed on the outside of the cap plate. And, the cap plate may be formed as a thin plate and coupled to the opening of the case. A vent 121 having a notch may be disposed on the top or bottom of the cap plate. The vent 121 may be formed to be thin on the top or bottom of the cap plate. When an event occurs in a specific battery cell 120, gas may be generated. The vent 121 is first opened by the gas. As a result, the gas may be exhausted to the outside of the battery cell 120. Therefore, when the event occurs in the battery cell 120, the battery cell 120 may be prevented from exploding.

And, although not shown in the drawing, a plurality of battery cells 120 may be electrically connected in series, parallel, or series/parallel through bus bars coupled to the positive and negative terminals, respectively.

The heat sink 140 may be disposed between the fire extinguishing sheet 150 and the battery cell 120. The heat sink 140 may be directly coupled to the top surface of the battery cell 120. Or, the heat sink 140 may be coupled with the lower plate 111, the end plate 112, and the side plate 113. Therefore, the heat sink 140 may be spaced apart from the battery cell 120.

The heat sink 140 may have a shape corresponding to the fire extinguishing sheet 150. The heat sink 140 may extend along the lower surface of the fire extinguishing sheet 150. Heat generated by an event in the battery cell 120 may be uniformly transferred along the extension direction of the heat sink 140. And, heat may be uniformly transferred to the fire extinguishing sheet 150 in contact with the heat sink 140. Accordingly, when an event occurs in the battery cell 120, the fire extinguishing agent of the fire extinguishing sheet 150 may be sprayed onto the region of the battery cell covered by the fire extinguishing sheet 150.

The heat sink 140 may include a metal or ceramic with excellent thermal conductivity. For example, the heat sink 140 may include copper, iron, or tungsten. When the heat sink 140 includes metal, a flame-retardant insulating material, such as aramid fiber, may be disposed between the heat sink 140 and the battery cell 120.

The heat sink 140 may comprise a ceramic containing aluminum nitride. When the heat sink 140 includes a ceramic, a separate insulating material may not be disposed between the heat sink 140 and the battery cell 120.

The heat sink 140 may include an exhaust hole 141. The exhaust hole 141 may be disposed in a region corresponding to the vent 121 of the battery cell 120. Thus, gas that is discharged to the outside of the battery cell 120 through the vent 121 when an event occurs in the battery cell 120 may be exhausted through the exhaust hole 141. The detailed configuration of the heat sink 140 is described below.

The fire extinguishing sheet 150 may be disposed between the heat sink 140 and the top cover 160. The fire extinguishing sheet 150 may extend in the same direction as the heat sink 140. For example, the fire extinguishing sheet 150 may extend in the longitudinal direction of the heat sink 140. The fire extinguishing sheet 150 may include an exhaust hole 151. The exhaust hole 151 may be disposed at a position corresponding to the exhaust hole 141. Thus, gas generated by an event in the battery cell may pass through the heat sink 140 and the exhaust hole 141 and 151.

The fire extinguishing sheet 150 may include an outer shell and a fire extinguishing agent. The outer shell may include polyurea and polyurethane. The fire extinguishing agent may be accommodated in the outer shell. The outer shell may be formed as a micro-sized fire extinguishing capsule. The fire extinguishing capsule may enclose the fire extinguishing agent. The fire extinguishing agent may include a halogenated carbon, such as a halogenated ketone series.

When the temperature of the gas generated by the event of the battery cell reaches about 200°C, the fire extinguishing capsule may be opened to spray the internal fire extinguishing agent. In detail, the fire extinguishing agent may begin a phase change at about 50°C. For example, the fire extinguishing capsule may open due to pressure resulting from the phase change of the fire extinguishing agent at a temperature of about 200°C, thereby allowing the fire extinguishing agent to be sprayed.

The top cover 160 is coupled to the upper surface of the fire extinguishing sheet 150. The top cover 160 covers the upper surface of the battery cell 120 together with the fire extinguishing sheet 150 and the heat sink 140. Accordingly, the battery cell 120 may be protected from impact applied by the top cover 160. And, the top cover 160 may include an exhaust hole 161. The exhaust hole 161 may correspond to the location of the exhaust holes 141 and 151. Accordingly, gas generated by the event of the battery cell 120 may be discharged to the outside of the top cover 160.

As described above, the energy storage module 100 according to the embodiment includes the heat sink 140. The heat sink 140 is disposed between the fire extinguishing sheet 150 and the battery cell 120. Heat generated from the battery cell 120 is uniformly transferred to the fire extinguishing sheet 150 by the heat sink 140. Accordingly, when the event occurs in a specific battery cell 120, the fire extinguishing agent of the fire extinguishing sheet is not sprayed only on the specific battery cell 120 but may be sprayed over a wide region. Therefore, it is possible to prevent the heat of the specific battery cell 120 from spreading to other battery cells.

Hereinafter, the heat sink will be described in detail.

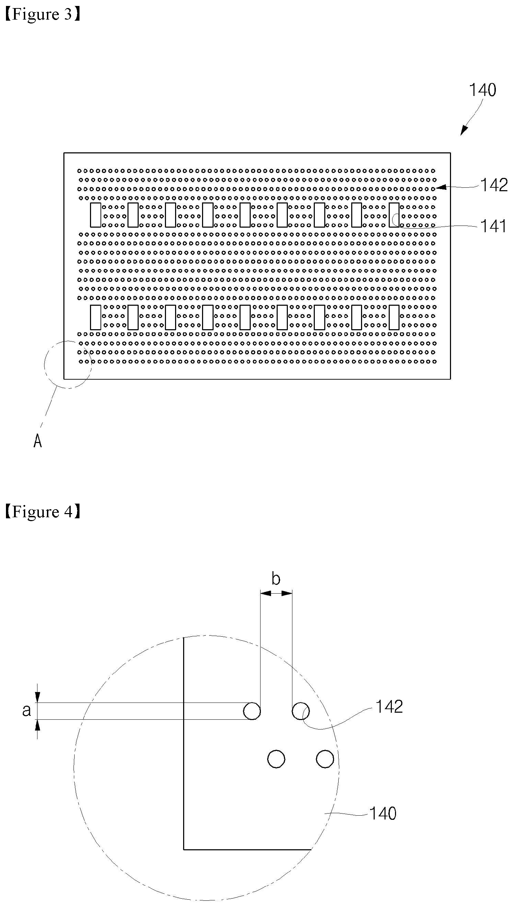

FIG. 3 is a plan view showing the heat sink of the energy storage module according to the embodiment. FIG. 4 is an enlarged view showing region A of FIG. 3.

Referring to FIG. 3, the heat sink 140 may have the shape of a rectangular plate formed long in one direction. A plurality of exhaust holes 141 may each be disposed at a position corresponding to the vent 121. The embodiment is not limited thereto, and the shape of the heat sink may be formed in various shapes depending on the arrangement of the battery cells 120.

The heat sink 140 may further include a plurality of through holes 142. The through holes may be spaced apart at a certain interval. The through holes 142 may be uniformly formed in a region other than the region where the exhaust holes 141 are formed. Referring to FIG. 4, the through holes 142 may be formed in a circular shape. The diameter a of the through holes 142 may be the same or similar. And, the distance b between adjacent through holes 142 may be the same or similar. The diameter a of the through holes 142 may be 2 mm to 5 mm. Preferably, the diameter a may be 2.5 mm to 3.5 mm. When the diameter a is within this range, it is confirmed that the Nusselt number is high. The Nusselt number is the ratio of the heat transfer rate to the thermal conductivity. The Nusselt number refers to the ratio of heat entering or leaving through the surface of an object in a fluid flow. Therefore, if the Nusselt number is high, heat is transferred well. Therefore, if the diameter a is within this range, the heat sink 140 may effectively transfer heat generated from the gas due to an event in the battery cell 120.

And, the distance b may be 1.5 to 2.5 times the diameter a. Preferably, the distance b may be 1.8 to 2.2 times the diameter a. When the through hole 142 is formed with a distance b within this range, the Nusselt number increases. Accordingly, it has been confirmed that the heat sink transfers heat best at the distance b within this range.

Hereinafter, the heat sink of the energy storage module according to other embodiments is described.

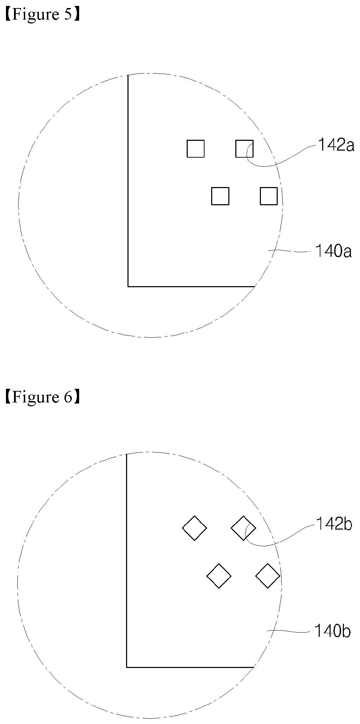

FIGS. 5 and 6 are partial enlarged views showing the heat sink of the energy storage module according to other embodiments.

Referring to FIG. 5, the through hole 142a of the heat sink 140a may be formed in a rectangular shape. Referring to FIG. 6, the through hole 142b of the heat sink 140b may be formed in a rhombus shape. The heat sink 140a and 140b may have a higher Nusselt number than a circular through hole 142 due to through holes 142a and 142b of various shapes. Accordingly, the heat sink 140a and 140b may transfer heat more effectively. Therefore, as in other embodiments, if the through hole 142a and 142b is formed in a square or rhombus shape, heat may be transferred more uniformly to the fire extinguishing sheet 150 disposed on top of the heat sink 140a and 140b.

The above is only one embodiment for implementing an energy storage module according to the disclosure, the disclosure is not limited to the above embodiment, and there is a technical spirit of the disclosure to the extent that various modifications can be made by anyone having ordinary skill in the art to which the disclosure pertains without departing from the gist of the disclosure as claimed in the following claims.

## Claims

1. An energy storage module comprising:
a cover member including an accommodation space therein;
a plurality of battery cells disposed in the accommodation space and arranged in one direction;
a top cover coupled to the cover member;
a heat sink disposed between the battery cells and the top cover; and
a fire extinguishing sheet contacting one surface of the heat sink,
wherein the fire extinguishing sheet sprays a fire extinguishing agent at or above a predetermined temperature.

2. The energy storage module of claim 1,
wherein the heat sink comprises an exhaust hole, and
wherein the exhaust hole is disposed in a region corresponding to a vent of the battery cell.

3. The energy storage module of claim 1,
wherein the heat sink comprises at least one of a metal and a ceramic.

4. The energy storage module of claim 1,
wherein the heat sink comprises a metal including copper, iron, or tungsten, or a ceramic including aluminum nitride.

5. The energy storage module of claim 1,
wherein the heat sink comprises a metal, and
wherein a flame-retardant insulating material is disposed between the heat sink and the battery cell.

6. The energy storage module of claim 1,
wherein the heat sink directly contacts the battery cell.

7. The energy storage module of claim 1,
wherein the heat sink is coupled to the cover member, and
wherein the heat sink is spaced apart from the battery cell.

8. The energy storage module of claim 1,
wherein the heat sink comprises a plurality of through holes.

9. The energy storage module of claim 8,
wherein the through holes comprise a circular shape, a rectangular shape, or a rhombus shape.

10. The energy storage module of claim 8,
wherein a diameter of each of the through holes is from 2 mm to 5 mm.

11. The energy storage module of claim 8,
wherein a diameter of each of the through holes is from 2.5 mm to 3.5 mm.

12. The energy storage module of claim 8,
wherein a distance between adjacent through holes is from 1.5 to 2.5 times the diameter of the through holes.

13. The energy storage module of claim 8,
wherein a distance between adjacent through holes is from 1.8 to 2.2 times the diameter of the through holes.

14. The energy storage module of claim 1,
wherein the fire extinguishing sheet comprises an exhaust hole, and
wherein the exhaust hole of the fire extinguishing sheet is disposed at a position corresponding to the exhaust hole of the heat sink.

15. The energy storage module of claim 1,
wherein the fire extinguishing sheet comprises a fire extinguishing capsule,
wherein the fire extinguishing capsule is formed in a micro-size, and
wherein the fire extinguishing capsule encloses the fire extinguishing agent therein.

16. The energy storage module of claim 1,
wherein the top cover comprises an exhaust hole, and
wherein the exhaust hole of the top cover is disposed at a position corresponding to the exhaust hole of the heat sink.
